(19) Europäisches Patentamt
European Patent Office
Office européen des brevets

(11) Numéro de publication : **0 552 085 A1**

(12) **DEMANDE DE BREVET EUROPEEN**

(21) Numéro de dépôt : **93400049.8**

(22) Date de dépôt : **12.01.93**

(51) Int. Cl.$^5$ : **C09K 9/02,** G02F 1/35, G02F 1/01

(30) Priorité : **13.01.92 FR 9200257**

(43) Date de publication de la demande : **21.07.93 Bulletin 93/29**

(84) Etats contractants désignés : **AT BE CH DE FR GB IT LI NL SE**

(71) Demandeur : **COMMISSARIAT A L'ENERGIE ATOMIQUE Etablissement de Caractère Scientifique Technique et Industriel
31/33, rue de la Fédération
F-75015 Paris (FR)**

(72) Inventeur : **Charra, Fabrice
30 av. Saint Laurent
F-91400 Orsay (FR)**
Inventeur : **Fichou, Denis
1 rue Delambre
F-75014 Paris (FR)**
Inventeur : **Nunzi, Jean-Michel
7 rue d'Aquitaine
F-92160 Antony (FR)**
Inventeur : **Pfeffer, Nicola
78 rue de Lille
F-75007 Paris (FR)**

(74) Mandataire : **Mongrédien, André et al
c/o BREVATOME 25, rue de Ponthieu
F-75008 Paris (FR)**

(54) **Modulateur spatial de lumière à adressage optique.**

(57) Modulateur spatial de lumière à adressage optique.

Ce modulateur comporte un élément actif (10) consistant en une couche mince active (14) d'un oligomère organique photochrome à excitation par voie optique d'états transitoires réversibles, présentant un spectre d'absorption lumineuse photo-induit à pic étroit et des moyens d'adressage d'un faisceau lumineux d'écriture (32) sur l'élément actif pour exciter lesdits états transitoires et donc induire ledit spectre.

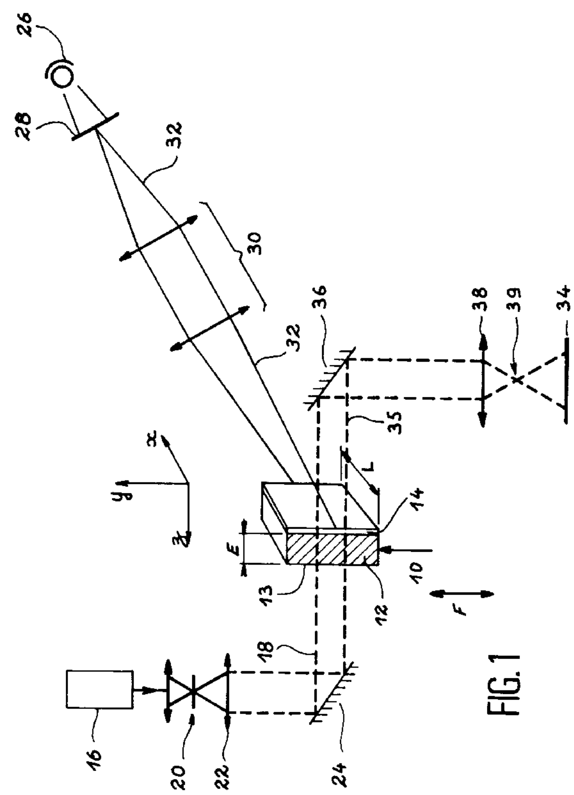

FIG.1

EP 0 552 085 A1

L'invention se rapporte à un modulateur spatial de lumière à adressage optique permettant notamment la transformation de lumière incohérente en lumière cohérente en vue de traiter des images formées en lumière incohérente tout en bénéficiant du haut parallélisme de l'optique cohérente.

Les convertisseurs de lumière incohérente en lumière cohérente permettent en particulier de convertir le champ de vision d'un détecteur ou d'un objectif en une modulation spatiale de la phase ou de l'amplitude d'un faisceau laser. Cette opération ayant lieu en temps réel, on peut par exemple projeter la scène observée sur un écran et suivre son évolution à l'aide d'un faisceau laser.

De façon générale, les modulateurs spatiaux de lumière, connus sous l'abréviation SLM, permettent de modifier spatialement la phase, la polarisation, l'amplitude et/ou l'intensité d'une ou deux distributions de lumière cohérente ou incohérente en fonction de l'espace et du temps.

La réalisation des SLM ainsi que leur application sont notamment décrites dans le document "Spatial light modulators : applications and functional capabilities" de C. Warde et A.D. Fisher paru dans "Optical signal processing", J.L. Horner (ed.) Academic, pp. 477-523, (1987).

Les principales voies de réalisation des SLM utilisent des matériaux photoréfractifs, des empilements de semi-conducteurs avec puits quantiques (AsGa par exemple) ou encore des cristaux liquides couplés à des photoconducteurs.

Tous ces dispositifs modifient, pendant un certain temps, la distribution d'intensité d'un faisceau lumineux, dit faisceau de lecture, pendant qu'on leur applique une différence de potentiel (cas des SLM adressés électriquement) ou qu'on les éclaire avec un faisceau de lumière, dit d'écriture, (cas des SLM adressés optiquement).

L'invention ne s'intéresse qu'aux modulateurs spatiaux à adressage optique et donc aux modulateurs excités par un faisceau lumineux.

Pour un fonctionnement optimisé des dispositifs utilisant des SLM, il faut que :

- les SLM présentent une réponse uniforme sur toute leur surface transverse éclairée par les faisceaux de lecture et d'écriture,
- les points images formés sur les SLM aient une taille D minimale $\leqq \mu m^2$, afin d'obtenir la résolution limite de l'optique et d'accroître la densité d'informations enregistrées,
- les SLM aient une épaisseur E réduite afin de limiter les aberrations optiques lors de la lecture des informations enregistrées (typiquement $E \leqq D^2/\lambda$ voisin de $1 \mu m$),
- le temps de réponse Tr des SLM soit le plus court possible et le temps de mémorisation Tm soit ajustable pour suivre en "temps réel" l'évolution d'images désirées,
- les SLM aient une grande sensibilité à l'inscription optique (laquelle est caractérisée par l'énergie nécessaire par point image), et
- les SLM présentent une gamme spectrale à l'écriture et à la lecture adaptable à la longueur d'onde du faisceau de lecture et du faisceau d'écriture utilisés.

Avec les SLM actuellement connus, on peut atteindre des sensibilités à l'enregistrement d'images et donc des énergies typiquement de 10pJ environ par point image et on sait assez bien choisir leurs gammes spectrales de fonctionnement aussi bien pour l'écriture que pour la lecture des informations enregistrées.

Les SLM connus utilisent l'empilement de différentes couches de matériaux aux propriétés complémentaires. En outre, ils font appel à des effets collectifs (cas des cristaux liquides) ou à des effets de polarisation (cas des photoréfractifs et des puits quantiques).

Du fait de la complexité de réalisation des SLM connus (structures multicouches), il est difficile d'obtenir une réponse uniforme sur toute la surface transverse du modulateur.

En outre, les points images des SLM connus ont une taille minimale limitée à environ $100 \mu m^2$ du fait de l'épaisseur importante de ces SLM et/ou du fait de la "collectivité" des effets utilisés. Par ailleurs, cette épaisseur élevée et cette "collectivité" des effets utilisés impliquent des aberrations optiques.

De plus, les effets collectifs sont lents à mettre en oeuvre : typiquement le temps de réponse Tr est $\geqq$ à $1 \mu s$).

Pour remédier à ces inconvénients, l'invention propose un modulateur spatial de lumière à adressage optique utilisant, comme élément sensible des matériaux photochromiques organiques, déposés en couches minces.

Ces matériaux photochromiques sont des matériaux photoréfractifs moléculaires. Or, les effets moléculaires sont pratiquement instantanés (Tr voisin de 0) contrairement aux effets collectifs. En outre, la taille minimale requise des points images qui est celle des molécules est faible devant les longueurs d'ondes utilisées permettant ainsi d'obtenir une résolution meilleure que celles des modulateurs à effet collectif et d'accroître la densité d'informations enregistrées sur le SLM.

De plus, l'emploi de couches minces limite les aberrations optiques.

Par ailleurs, on gagne en facilité de fabrication, ce qui entraîne un faible coût pour ces modulateurs.

Un modulateur spatial de lumière à adressage optique utilisant un matériau photochromique moléculaire organique, l'éosine dispersée dans de l'alcool polyvinylique, est décrit dans le document "All optical switching by organic nonlinearly absorbing molecules", K.W. Beeson et al., pp. 364-371, SPIE, vol. 1337, "Nonlinear Optical Properties of Organic Materials III", 1990.

Dans ce modulateur, on utilise l'excitation des états triplets de l'éosine. De plus, les énergies nécessaires pour obtenir des effets minimes sont assez peu convaincantes. En effet, l'absorption lumineuse photo-induite est étalée dans tout le domaine visible. En outre, du fait de cet étalement spectral de l'absorption, ce modulateur présente une sensibilité à l'inscription optique relativement faible.

Pour améliorer cette sensibilité, on peut toujours utiliser des amplificateurs optiques notamment à galettes de microcanaux comme décrit dans l'article de Warde et Fisher cité précédemment, mais dans ce cas, on n'obtient plus de réponse uniforme sur toute la surface du modulateur, plus d'épaisseur faible de ce modulateur ni de tailles de points images réduites.

Aussi, l'invention se rapporte à un modulateur spatial de lumière à adressage optique utilisant un matériau organique photochromique particulier permettant une grande sensibilité à l'inscription optique tout en satisfaisant aux différents critères d'optimisation cités précédemment.

Ce modulateur présente notamment une sensibilité à l'écriture supérieure à 10pJ maximum par point image. Il autorise en outre le suivi d'images à des cadences très élevées, de l'ordre du GHz.

De façon précise, l'invention a pour objet un modulateur spatial de lumière à adressage optique comportant un élément actif consistant en une couche mince active d'un oligomère organique photochrome à excitation par voie optique d'états transitoires réversibles, présentant un spectre d'absorption lumineuse photo-induit à pic étroit, et des moyens d'adressage d'un faisceau lumineux de lecture sur l'élément actif pour exciter lesdits états transitoires et donc induire ledit spectre.

L'originalité de l'invention est basée sur l'utilisation d'oligomères à "concentration spectrale" (ou pic étroit) d'absorption photo-induite.

La "concentration spectrale" se définit comme le rendement quantique et est le fait de transférer par photoexcitation, d'une région spectrale à une autre, des absorptions étalées initialement avec une amplitude d'absorption amplifiée dans le rapport R

$$\frac{\text{étendue spectrale dans la région d'absorption initiale}}{\text{étendue spectrale dans la région d'absorption induite}}$$

satisfaisant à la loi $\int\alpha(E)dE =$ constante, avec E représentant l'énergie lumineuse incidente et $\alpha$ le coefficient d'absorption de l'oligomère dans la région spectrale initiale. En outre, la région spectrale d'absorption photoinduite se situe dans une région spectrale de transparence, en temps normal, de la molécule.

En pratique, la concentration spectrale R est $\geqq 10$.

Cette concentration spectrale est une propriété de certains oligomères photo-excités qui n'avait, jusqu'à ce jour, jamais été mise en évidence.

Cette concentration spectrale peut être observée pour des oligomères à états triplets ou singulets photoexcités.

De préférence, on utilise des oligomères à états singulets photo-excités du fait de leur réponse et de leur rendement quantique plus élevés que ceux des oligomères à états triplets.

Le matériau photochrome est en particulier un oligomère constitué de maillons (ou motifs) rigides libres de tout mouvement entre eux et comportant une alternance régulière de simples et doubles liaisons carbonecarbone.

La rigidité des maillons élémentaires permet d'éviter l'isomérisation de la molécule après photo-excitation , ce qui va dans le sens d'un spectre d'absorption lumineuse photo-induit à pic étroit. Ainsi, des polyènes (carotène par exemple) ou les cyanines ne marchent pas.

La liberté de mouvement entre maillon élémentaire permet à l'oligomère excité d'adopter une forme délocalisée des électrons bloquant la molécule dans une configuration particulière (planaire), réduisant l'alternance de longueurs entre les carbones (c'est-à-dire l'alternance des longueurs de simples liaisons et de doubles liaisons) et accroîssant l'homogénéité des conformations de la molécule ; ceci va aussi dans le sens d'un spectre d'absorption lumineuse photo-induit à pic étroit.

L'alternance régulière de simples et doubles liaisons entre les atomes de carbone permet en outre une bonne conjugaison électronique, ininterrompue le long de la chaîne de la molécule, ce qui va aussi dans le sens d'un spectre d'absorption lumineuse photo-induit à pic étroit.

Le matériau photochrome de l'invention est un oligomère, c'est-à-dire un matériau de faible poids moléculaire, de longueur réduite et de structure chimique définie. Ceci permet l'obtention de points images de faible dimension par rapport aux longueurs d'onde des faisceaux de lecture utilisés et surtout, ceci va dans le sens d'un spectre d'absorption lumineuse à pic étroit.

La nature oligomérique permet d'éviter par rapport à un polymère l'observation de pics photo-induits de

plusieurs oligomères à l'état excité. En outre, les polymères ne marchent généralement pas.

Les oligomères de l'invention peuvent être des oligomères constitués de plusieurs monomères identiques ou différents, assemblés entre eux par des liaisons carbone-carbone simples.

Les oligomères utilisables dans l'invention sont plus spécialement ceux comportant m cycles aromatiques avec m un nombre entier allant de 2 à 24 et de préférence de 2 à 12. C'est la présence de ces cycles qui confère la rigidité aux maillons élémentaires de l'oligomère. En particulier, ces cycles comportent 5 chaînons bien que des cycles à 6 chaînons peuvent être envisagés.

Ces oligomères sont constitués plus spécialement d'un ou plusieurs monomères de formule générale (I) :

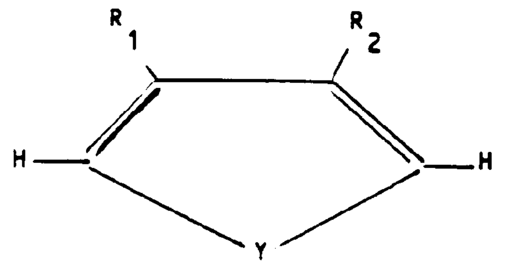

(I)

dans laquelle Y représente 0, S, Se, Te, -C(RR') ou -N(R)- avec R et R' représentant indépendamment H ou un groupement alkyle, alkyle substitué, aryle ou aryle substitué ; $R_1$ et $R_2$ représentent chacun indépendamment H, un halogène ou un groupement $-CF_3$, $-NO_2$, -CN, $-COOR_3$, $-NR_4(R_5)$, alkyle, alkyle substitué, aryle, aryle substitué, alcoxy ou polyalcoxy avec $R_3$ représentant un groupement alkyle substitué ou un métal, $R_4$ représentant H ou un groupement alkyle ou alkyle substitué, $R_5$ représentant un groupement alkyle, acyle ou aryle ; ou bien $R_1$ et $R_2$ représentent ensemble un groupement hydrocarboné divalent éventuellement insaturé ou éventuellement interrompu et/ou terminé par au moins un hétéroatome.

Les halogènes utilisables pour $R_1$ et $R_2$ sont en particulier des atomes de chlore, de brome ou de fluor.

Dans cette définition, les groupements alkyle, alkyle substitué ou alcoxy ont généralement de 1 à 12 atomes de carbone. Les groupements alkyle substitué sont par exemple des groupements aralkyle, notamment phénylalkyle dont l'alkyle a 1 ou 2 atomes de carbone, ou des groupements alkyle substitué à leur extrémité par un groupement carboxylate, sulfonate ou sulfate.

Les groupements aryle sont notamment des groupements phényle et les groupements aryle substitué peuvent porter notamment des substituants alkyle, alcoxy, halogène, $CF_3$, $NO_2$, sulfonate, carboxylate, etc...

Les groupements carboxylate et sulfonate sont salifiés notamment par un métal alcalin (Li, Na, K).

Lorsque $R_3$ représente un métal, il s'agit notamment d'un métal alcalin.

Lorsque $R_5$ représente un groupement acyle, il s'agit d'un groupement acyle dérivé notamment d'un acide alkylcarboxylique ou arylcarboxylique.

Lorsque $R_1$ et $R_2$ représentent ensemble un groupement hydrocarboné divalent éventuellement insaturé, il s'agit notamment d'un groupement alkylène ayant de 2 à 12 atomes de carbone, éventuellement insaturé ou interrompu et/ou terminé par des hétéroatomes tels que des hétéroatomes d'oxygène ou de soufre ; $R_1$ et $R_2$ peuvent par exemple représenter ensemble un groupement $-CH_2-CH=CH-CH_2-$, $-O-(CH_2)_p-$, $-O-(CH_2CH_2O)_q-$, avec p et q étant des nombres entiers de 1 à 12.

Lorsque $R_1$ et/ou $R_2$ représentent un groupement polyalcoxy, il s'agit notamment d'un groupement $-O(CH_2CH_2O)_rCH_2CH_3$, où r est un nombre entier allant de 1 à 4.

Il est aussi possible d'utiliser des oligomères dans lesquels certains des atomes de carbone du squelette carboné à simples et doubles liaisons alternées sont remplacés par des atomes d'azote.

En particulier, l'oligomère présente la formule (II) suivante :

(II)

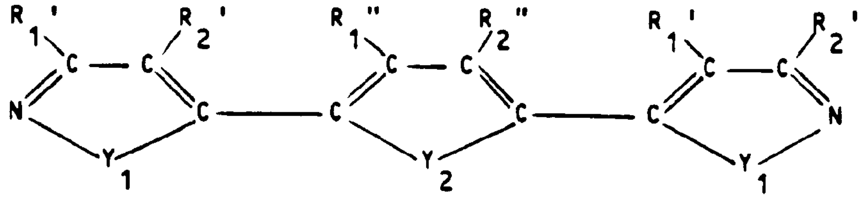

où $Y_1$ et $Y_2$ peuvent être identiques ou différents et ont la signification de Y donnée précédemment et $R_1'$, $R_2'$, $R_1''$ et $R_2''$, qui peuvent être identiques ou différents ont les significations de $R_1$ et $R_2$ données précédemment.

Les cycles hétéroatomiques peuvent être disposés en structure "trans" (les Y ou $Y_1$ et $Y_2$, de deux cycles consécutifs étant disposés de part et d'autre de la liaison carbone-carbone les unissant) ou en structure "cis" (les Y, $Y_1$ et $Y_2$, de deux hétérocycles consécutifs étant disposés du même côté de la liaison carbone-carbone les reliant).

Dans les oligomères de formule I et II, la rigidité des maillons est due aux atomes ou groupes d'atomes Y, $Y_1$ et $Y_2$. De plus, ces atomes ou groupes d'atomes, qui du fait que leurs liaisons saturées ne participent pas à la conjugaison électronique, assurent une conjugaison électronique ininterrompue le long du squelette carboné. La liberté de mouvement entre ces maillons rigides est assurée par les liaisons simples carbone-carbone.

De préférence, on utilise les oligomères de thiophène, notés α-nT, avec n allant de 2 à 12 à structure "cis".

On donne ci-après la structure chimique de quelques α-nT utilisables dans l'invention.

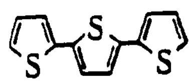
α-3T

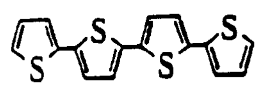
α-4T

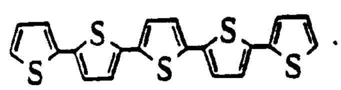
α-5T

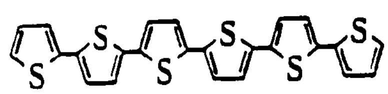
α-6T

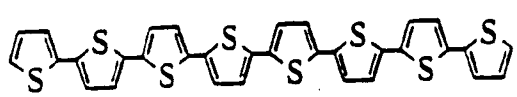
α-8T

La liberté de mouvement entre maillons rigides (par exemple cycles) est une condition nécessaire pour obtenir un spectre d'absorption photo-induit à pic étroit. Ainsi ne sont pas utilisables dans l'invention les oligomères pontés par du soufre, comme ceux décrits dans le document "Synthesis of tetrathieno-acene and pentathieno-acene : UV-spectral trend in a homologous series of thieno-acenes", Y. Mazaki et K. Kobayashi, Tetrahedron Lett. 30, 3315 (1989).

Les oligomères qui présentent la formule (III) suivante sont aussi parfaitement adaptés à l'invention.

III

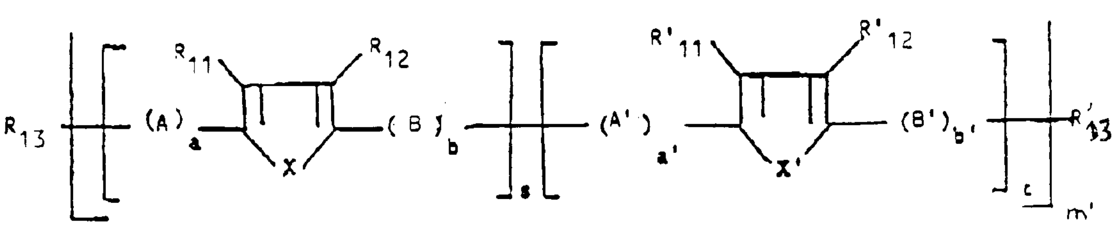

dans laquelle X et X' représentent indépendamment O, S, Se, Te, -C(RR') ou -N(R)-, avec R et R' représentant indépendamment H, ou un groupement alkyle, alkyle substitué, aryle ou aryle substitué ; $R_{11}$, $R_{12}$, $R'_{11}$, $R_{12}$, $R_{13}$, $R'_{13}$ représentent chacun indépendamment -H, Cl, F, un groupement $-CF_3$, $-NO_2$, -CN, $-COOR'_3$, $-N(R'_4)(R'_5)$, ou un groupement alkyle, alkyle, substitué, aryle, aryle substitué, alcoxy ou polyalcoxy, avec $R'_3$ représentant un groupement alkyle ou alkyle substitué ou un métal, $R'_4$ représentant H ou un groupement alkyle ou alkyle substitué, $R'_5$ représentant un groupement alkyle, acyle ou aryle, ou bien les couples $R_{11}$ et $R_{12}$ et/ou $R'_{11}$ et $R'_{12}$ représentant ensemble un groupement hydrocarboné divalent éventuellement insaturé ou éventuellement interrompu et/ou terminé par au moins un hétéroatome ; A, B, A', B' représentent indépendamment

un groupement $-C(R_6)=C(R_7)-$, $-C{\equiv}C-$, $-N(R_8)-$, $-C(R_9)=N-$, $-N=C(R_{10})-$, avec $R_6$, $R_7$, $R_8$, $R_9$ et $R_{10}$ représentant indépendamment -H, ou un groupement alkyle, alkyle substitué, aryle ou aryle substitué ; a, b, a', b' sont des nombres égaux indépendamment à 0 ou à 1 ; ou bien B représente en outre un groupement arylène cyclique ou hétérocyclique et dans ce cas b=1 et a'=0 ; s et t sont des nombres entiers, y compris zéro, dont l'un au moins est différent de zéro, m' est un nombre entier au moins égal à 1 ; les nombres s, t et m' étant tels que m'(s+t)=m avec m étant un nombre entier allant de 4 à 24.

Les oligomères de l'invention peuvent aussi présenter la formule (IV) :

(IV) 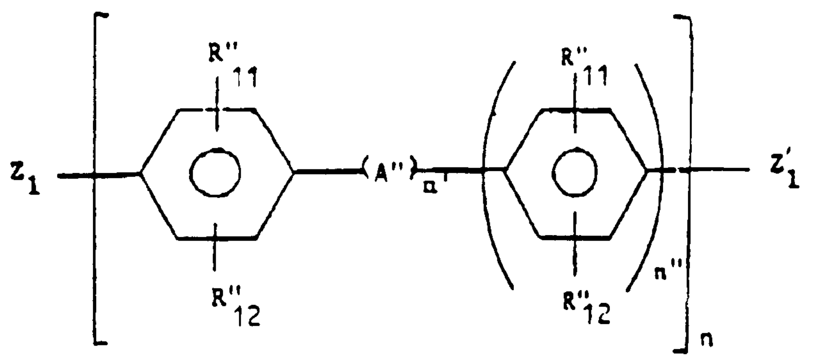

dans laquelle $R''_{11}$, $R''_{12}$, $Z_1$ et $Z'_1$ représentent chacun indépendamment -H, Cl, F ou un groupement trifluorométhyle ou un groupement nitro ; A" représente $-C(T_1)=C(T_2)-$, $-C{\equiv}C-$, $-N(R_{14})-$, $-C(R_{15})=N-$, $-N=C(R_{16})-$, avec $T_1$ et $T_2$ représentant indépendamment -H ou un alkyle inférieur ; $R_{14}$, $R_{15}$ et $R_{16}$ représentent -H, un groupement alkyle, alkyle substitué, aryle ou aryle substitué ; n' est un nombre égal à zéro ou 1 ; n" est un nombre égal à zéro ou 1, et n est un nombre entier allant de 3 à 12.

Les oligomères cités précédemment présentent par rapport au matériau photochromique de l'art antérieur un spectre d'absorption photo-induit à pic étroit (largeur de bande à mi-hauteur de 30 nm environ pour les α-nT). En outre, ce pic d'absorption photo-induit présente une intensité élevée. Il s'ensuit une variation de la transmission de la lumière du matériau organique de 1 à 0,8 sous l'action d'une impulsion laser.

Personne, jusqu'à ce jour n'avait encore observé l'excitation de l'état transitoire photo-induit à pic étroit des oligomères de l'invention.

Par ailleurs, la durée du photochromisme transitoire induit par une impulsion lumineuse (correspondant au temps Tm de mémorisation) est supérieure à la durée de l'impulsion excitatrice. En outre, le temps de réponse du modulateur de l'invention est extrêmement court et peut être inférieur à la durée d'une impulsion lumineuse du faisceau excitateur.

Pour accorder la gamme de fréquences du pic d'absorption photo-induit à la fréquence des faisceaux de lecture et d'écriture, on peut jouer sur l'environnement physico-chimique de l'oligomère en l'utilisant soit à l'état pur, soit en mélange dans un polymère inactif transparent à la longueur d'onde des faisceaux de lecture et d'écriture, c'est-à-dire transparent à la lumière visible et ultraviolette, jouant le rôle de liant.

Comme liants utilisables dans l'invention, on peut citer le polyméthacrylate de méthyle (PMMA), le polyéthylène, l'alcool polyvinylique, le polystyrène, ...

La couche mince de polymère-oligomère contient de 90 à 50% en poids de polymère et de 10 à 50% en poids d'oligomère.

Pour l'accord en fréquence, on peut aussi jouer sur la structure de l'oligomère (formules I, II, III ou IV, choix de Y, $Y_1$, $Y_2$, X, X' et des substituants $R_1$, $R_2$, $R'_1$, $R''_1$, $R'_2$, etc...) ou lui adjoindre un ou plusieurs photosensibilisateurs.

Ces photosensibilisateurs sont en particulier des anhydrides d'acide, des aldéhydes, des cétones, des quinones, des dérivés polynitrés comme ceux cités dans le document "Sensitization in the photoconductance of poly-N-vinylcarbazole", Y. Hayashi et al. Bull. Chem. Soc. Jpn. 39, pp. 1660-1670, vol. 39.

Ces photosensibilisateurs représentent de 10 à 100 parties en poids pour 100 parties en poids d'oligomère.

Par ailleurs, en fonction de l'environnement physicochimique de l'oligomère et de sa structure, il est possible d'accorder le temps de mémorisation et donc de changer la cadence de fonctionnement du modulateur. En pratique, ce modulateur peut fonctionner dans le domaine de fréquence allant de 1KHz à 5 GHz.

Le modulateur de l'invention peut être utilisé en lumière naturelle ou en lumière polarisée. Dans ce dernier cas, il est préférable d'orienter les molécules parallèlement entre elles dans le plan de la couche afin d'accroître sa sensibilité à la lumière polarisée. Cette orientation peut être réalisée à l'aide d'un recuit thermique comme décrit dans le document "New rigid rod liquid crystal molecule precursor of conjugated polymers : α-sexithienyl", C. Taliani et al., J. Molec. Electron. 6, 225-226, (1990). Ce recuit permet de multiplier par trois la sensibilité du modulateur, toutes choses égales par ailleurs.

Le modulateur de l'invention est en particulier destiné à moduler la lumière d'un faisceau de lumière incohérente pour la rendre cohérente en utilisant un faisceau laser pour la lecture. Celui-ci peut fonctionner en continu ou de manière pulsée.

D'autres caractéristiques et avantages de l'invention ressortiront mieux de la description qui va suivre, donnée à titre illustratif et non limitatif, en référence aux figures annexées, dans lesquelles :

- la figure 1 représente schématiquement le fonctionnement d'un modulateur spatial de lumière à adressage optique, conforme à l'invention utilisant un support transparent de la couche active,
- la figure 2 représente schématiquement le spectre d'absorption d'une couche mince d'$\alpha$-hexathiènylène, donnant la densité optique D.O. en fonction de la longueur d'onde ;
- la figure 3 représente schématiquement les variations de la densité optique (D.O.) de l'absorption induite, et de l'absorption permanente ($\varepsilon$) exprime en $cm^{-1}$ litre/mole, en fonction de l'énergie exprimée en eV ;
- La figure 4 représente schématiquement un modulateur conforme à l'invention utilisant un support transparent et un miroir semi-transparent,
- la figure 5 représente schématiquement un modulateur conforme à l'invention utilisant un support réfléchissant.

Sur la figure 1, on a représenté schématiquement le fonctionnement d'un SLM à adressage optique conforme à l'invention utilisé pour la transformation d'images incohérentes en images cohérentes. Mais, bien entendu, comme indiqué précédemment, le SLM de l'invention est d'application beaucoup plus générale.

L'élément actif du SLM porte la référence générale 10 et est constitué d'un support transparent 12 en silice fondue, de 1mm d'épaisseur et d'une couche mince active 14 de 200 à 500nm d'épaisseur d'un oligomère organique photochrome pur satisfaisant aux formules (I), (II), (III), (IV) ou (V) données précédemment. Cet oligomère est déposé par évaporation sous vide. Il s'étend sur toute la surface yx de grande dimension du support 12.

Pour une couche mince 14 en un oligomère de thiophène x-nT, on peut utiliser la méthode de dépôt décrite dans le document "Linear and nonlinear optical properties of thiophene oligomers", D. Fichou et al., "Organic materials for nonlinear optics" R.A. Hann et D.Bloor (eds.), Royal Society of Chemistry, pp. 176-182, (1989).

Les oligomères de formule (I) ou (II) utilisables dans l'invention sont fabriqués notamment comme décrit dans le document FR-A-2 648 140.

Le dispositif optique représenté sur la figure 1 comprend, de plus, une diode laser 16 émettant un faisceau de lumière cohérente 18 de lecture, destiné à tester l'état singulet de la couche 14 d'oligomère.

Après passage à travers un filtre spatial 20 destiné à disposer d'un faisceau uniforme, le faisceau 18 est collimaté à l'aide d'une lentille de collimation 22, de façon à arriver sous forme d'un faisceau parallèle s'étendant sur toute la longueur L du SLM 10. Ce faisceau 18 arrive avec une incidence normale sur le SLM.

Pour des problèmes d'encombrement, un miroir de renvoi 24 peut être intercalé entre la lentille de collimation 22 et le SLM.

Le faisceau de lecture 18 est, dans le mode représenté sur la figure 1, envoyé sur la couche 14 via le support 12, c'est-à-dire par la face arrière 13 du SLM.

Une source de lumière blanche 26 éclaire un objet 28 à étudier dont on forme l'image à la surface de la couche active 14 du SLM via un objectif 30. Le faisceau de lumière incohérente ou faisceau d'adressage contenant l'information à étudier porte la référence 32 et est envoyé par la face avant du SLM, c'est-à-dire directement sur la couche d'oligomère 14. Il forme un certain angle par rapport à la normale au plan xy de l'élément 10 du SLM.

L'éclairement simultané de la couche 14 par le faisceau de lecture 18 et le faisceau d'écriture 32 permet l'obtention d'un faisceau de lumière cohérente 35 contenant les informations contenues initialement dans le faisceau incohérent 32.

Il est possible de former l'image cohérente sur un écran 34 après que le faisceau 35 ait été réfléchi par un miroir 36 puis focalisé par une lentille de focalisation 38.

Dans le plan 39 de focalisation, il est possible de traiter l'image cohérente si nécessaire (amplification, filtration, contraste de phase, ...).

Selon l'application envisagée, il est possible d'utiliser une source laser 16 émettant de façon pulsée ou continue.

Le SLM représenté sur la figure 1 peut fonctionner à 300MHz. Si l'on désire un éclairement continu de l'image enregistrée dans le SLM, on utilise une intensité d'écriture et donc du faisceau 32 supérieure à $30kW/cm^2$ au niveau de la couche active 14.

En utilisant une surface active de $1mm^2$, ce qui représente $10^6$ points images de résolution, on a on a besoin de 300W pour activer le SLM. On dispose de cette intensité lumineuse en éclairant l'objet 28 avec une lampe

blanche 26 d'intensité voisine du kW. On peut aussi, éclairer l'objet avec de puissants projecteurs de cinéma de 10kW et en concentrant la lumière diffusée en arrière sur l'élément sensible du SLM.

Dans le dispositif représenté sur la figure 1, il est possible de remplacer le substrat de silice 12 par un autre matériau transparent optique et conducteur de la chaleur tel que le saphir ou le diamant.

On peut aussi utiliser une source de lumière 26 pulsée si l'on désire réduire la cadence de fonctionnement du dispositif.

On peut, en outre, déplacer en permanence l'élément sensible 10 du modulateur selon le plan xy, comme indiqué par la flèche F, à une vitesse petite devant le temps de mémorisation ou de réponse Tr de l'élément sensible du SLM, afin d'augmenter sa durée de vie (en limitant ainsi ses dégradations).

A l'aide de la méthode décrite dans le document "Relaxation of one- and two-photon excitations in a polydiacetylene red form : a frequency and phase resolved analysis", F. Charra et J.M. Nunzi, "Organic molecules for nonlinear optics and photonics", pp. 192-194, J. Messier et al. (eds.), Kluwer (1991), on a testé le spectre photo-induit de l'α-6T.

Ainsi, avec un dispositif proche de celui représenté sur la figure 1, dans lequel le faisceau d'écriture 32 était un faisceau laser, on a réalisé le spectre d'absorption d'une couche mince évaporée d'α-hexathiényle, noté α-6T, de 320nm d'épaisseur. Ce spectre est représenté sur la figure 2.

Cette figure 2 donne les variations de la densité optique D.O., inverse du logarithme décimal de la transmission (rapport de l'intensité transmise à l'intensité incidente), en fonction de la longueur λ d'onde exprimée en nm.

L'excitation de la couche d'α-6T est effectuée par une impulsion laser de 33ps de durée, de 26mW/$cm^2$ d'intensité à 532nm, indiquée par la flèche F. Elle produit une absorption induite transitoire exceptionnellement étroite autour de 800nm (pic a), correspondant à l'excitation d'un état transitoire avec un fort rendement quantique R. En dehors du pic induit a, le spectre d'absorption de l'α-6T s'étale de 350 à 600nm et l'énergie s'étale de 2 à 3,5eV.

En revanche, l'énergie du pic d'absorption a s'étale autour de 1,55eV au pied du pic a et plus spécialement entre 1,5 et 1,6 eV.

Contrairement aux matériaux de l'art antérieur, l'absorption induite (pic a) est concentrée en un pic étroit qui produit une variation de transmission de la couche mince 14 de 1 à 0,8 sous l'action du faisceau laser d'écriture.

L'absorption induite (pic a) ne dépend pas (en position) de la longueur d'onde d'excitation du faisceau laser dans la région d'absorption de 350-600nm (pic b) de l'α-6T. Sa durée de vie ou temps de mémorisation Tm est de 3ns et est donc plus longue que la durée de l'impulsion laser utilisée. En outre, il faut une énergie lumineuse W de 0,9mJ/$cm^2$ environ pour l'inscription à 532nm d'une image cohérente (par exemple celle de l'objet 28). Cette énergie devient de l'ordre de 0,1mJ/$cm^2$ pour un faisceau laser de lecture à 400nm.

Ainsi, l'amplitude, par excitation, du spectre photo-induit est d'un ordre de grandeur supérieur au maximum d'absorption de l'état singulet vers 400nm.

On a alors une énergie de 1pJ/$\mu m^2$ ou 1pJ/point image dans la mesure où la densité d'enregistrement d'un SLM à couche mince d'un matériau photochromique moléculaire est seulement limitée par la diffraction.

En outre, les inventeurs ont constaté expérimentalement que le temps de réponse Tr d'un SLM à oligomères de thiophène de l'invention est plus court que la durée des impulsions lasers excitatrices, et donc inférieur à 33ps. Ce temps est très inférieur à celui obtenu en utilisant les matériaux à effet collectif.

Les effets étudiés pour le stockage optique d'informations dans un SLM avec les oligomères à pic d'absorption photo-induit étroit de l'invention sont très supérieurs à ceux de l'art antérieur (voir à cet effet le document "Photochromism" de R. Dessauer et J.P. Paris, paru dans "Advances in Photochemistry", vol. 1, Interscience, pp. 275-324, (1963)). En effet, on obtient, grâce à l'invention, une sensibilité du SLM proche de la limite théorique d'un photon absorbé pour une espèce excitée créée, avec une absorption molaire supérieure à $10^5 cm^{-1}$/(mol/l)(ce qui montre clairement la concentration spectrale).

Pour illustrer la concentration spectrale ainsi que l'efficacité de modulation due à l'excitation de l'état singulet par rapport à celle de l'état triplet, on a représenté sur la figure 3 annexée les variations de la densité optique (D.O.) de l'absorption induite et de l'absorption permanente (ε) exprimé en $cm^{-1}$ /(mol/l), en fonction de l'énergie (E) en eV.

Le pic c de la figure 3 correspond à l'absorption induite pour l'état singulet, le pic d correspond à l'absorption induite pour l'état triplet et la courbe e est le spectre absorption selon la loi de Bert Lambert du même matériau photochromique. Celui-ci consiste en une solution de $10^{-3}$mol/l d'α-3T dans du diméthylsulfoxide (DMSO).

L'excitation est effectuée avec un laser émettant des impulsions de 355nm de 20ps avec une énergie de 0,8mJ/$cm^2$. La flèche f symbolise cette excitation.

La figure 3 montre que la densité optique de l'absorption induite par excitation de l'état singulet (pic c) des

oligomères de thiophène, est très supérieure à celle de l'excitation de l'état triplet (pic d) de ces mêmes oligomères.

De plus, il ressort de la figure 3 que l'état excité singulet permet une concentration spectrale de l'absorption de 3,5 à 2eV. En outre, l'absorption photo-induite vérifiant toujours l'intégrale $\int\alpha(E).dE$ = constante avec $\alpha$ représentant l'absorption, E représentant l'énergie, dE représentant l'élément d'intégration, on comprend tout l'intérêt des oligomères de thiophène pour la réalisation de SLM.

Comme indiqué précédemment, l'accordabilité en fréquence peut être obtenue en changeant la structure de l'oligomère. Ceci ressort clairement du tableau ci-après montrant l'accordabilité en fréquence des oligomères de thiophène de 2 à 6 motifs de thiophène liés entre eux en $\alpha$.

Cette accordabilité a été testée dans une solution de dichlorométhane.

Dans le tableau, la seconde colonne donne la longueur d'onde du faisceau laser excitateur ou d'écriture et la troisième colonne donne la longueur d'onde du pic d'absorption a de l'état singulet photo-induit.

TABLEAU

| OLIGOMERE | $\lambda$ EXCITATION (nm) | $\lambda$ ABSORPTION INDUITE (nm) |
|---|---|---|
| $\alpha$-2T | 355 | 500 |
| $\alpha$-3T | 355, 395 | 603 |
| $\alpha$-4T | 355, 395 | 730 |
| $\alpha$-5T | 355, 395 | 830 |
| $\alpha$-6T | 395, 532 | 900 |

Dans tous les cas, les oligomères ont été excités près du maximum de leur absorption optique et une sensibilité d'écriture de W=1pJ/$\mu m^2$ a été obtenue lorsque la variation de la transmission lumineuse par l'oligomère était de 20%, ce qui correspond à une variation de phase de l'ordre de 0,1rd de part et d'autre de 800nm.

Par ailleurs, on constate dans ce tableau que la gamme de longueur d'onde du pic singulet (pic a) autour de 800nm dépend du milieu environnant de l'oligomère. En effet, ce pic se situe à 800nm pour l'$\alpha$-6T déposé en couches minces et à 900nm pour l'$\alpha$-6T en solution dans $CH_2Cl_2$. Il en est de même pour l'emploi de matrice solide de polymère transparent, du type PMMA, mélangé avec l'$\alpha$-6T.

On a donc bien réalisé un SLM rapide optimisé avec les oligomères de thiophène.

Avec le $\alpha$-6T évaporé en couches minces, la durée de vie de l'état excité (ou temps de mémorisation) est de 3ns ; il est donc possible d'utiliser ce SLM pour le suivi d'images évoluant à des cadences allant jusqu'à 300MHz.

En incluant ces oligomères dans la matrice de polymère, on les isole les uns des autres et on accroît alors de façon significative la durée de vie de l'état excité. Elle peut atteindre typiquement 1$\mu$s pour une couche mince de PMMA-$\alpha$-6T dans laquelle $\alpha$-6T représente 1% en poids de la couche. Ceci correspond à une cadence de pics photo-induits de 1MHz.

Par ailleurs, la durée de vie de l'état excité de l'$\alpha$-6T en solution dans $CH_2Cl_2$ est de l'ordre de 100ps. Dans ces conditions physico-chimiques, on peut donc obtenir une cadence de fonctionnement du SLM de l'ordre de 10GHz.

Afin d'accroître le contraste à la lecture du SLM conforme à l'invention, il est possible, comme représenté sur la figure 4, d'interposer entre la couche active 14 et le substrat de silice 12 un miroir 40 qui est réfléchissant à la longueur d'onde du faisceau de lecture 18 et transparent à la longueur d'onde du faisceau d'écriture 32. Ce miroir 40 doit présenter pour une couche d'$\alpha$-6T un coefficient de réflexion maximale vers 800nm. De tels miroirs multidiélectriques (miroirs pour laser par exemple) sont disponibles dans le commerce, notamment à la Société MATRA.

Dans ce mode de réalisation, le faisceau d'écriture 32 de lumière incohérente est envoyé par la face arrière 13 du SLM, c'est-à-dire à travers le substrat 12, alors que le faisceau laser de lecture 18 est envoyé sur la face avant, c'est-à-dire du côté de la couche active 14.

Pour des problèmes d'encombrement, il est possible d'utiliser un miroir semi-transparent 42 en sortie de la lentille de collimation 22 transmettant une partie du faisceau d'écriture sur la couche active ainsi que le faisceau lumineux 35 véhiculant l'image cohérente. Dans ce cas, la source laser 16 et les éléments optiques 20, 22 et 42 peuvent être situés dans le prolongement l'un de l'autre, contrairement à ce qui est représenté sur la figure 1 et les faisceaux de lecture 18 et d'écriture 32 sont adressés perpendiculairement au plan xy du SLM.

Afin d'augmenter la vitesse de diffusion thermique du SLM, typiquement d'un facteur 5, (l'irradiation du

SLM par les faisceaux de lumière d'écriture et de lecture entraînant un échauffement important du SLM), il est possible de remplacer le support de silice 12 par un support métallique 43 réfléchissant tel que représenté sur la figure 5. Le support métallique peut consister en une lame de 1mm d'argent ou d'aluminium poli.

Dans ce mode de réalisation, le faisceau laser de lecture 18 et le faisceau d'écriture 32 véhiculant l'image incohérente à étudier sont envoyés tous les deux sur le SLM du côté de la couche active 14. Par exemple le faisceau d'écriture 32 est envoyé selon une incidence normale à la surface de la couche 14 et le faisceau de lecture 38 est envoyé selon une incidence oblique de façon à séparer les directions d'incidence des faisceaux d'écriture et de lecture.

Il est en outre possible de faire tourner ou de déplacer l'élément sensible 10 du modulateur (flèche F par exemple) par tout moyen mécanique connu afin de changer la région de la couche mince 14 insolée, à une cadence inférieure à celle de la mémorisation pour augmenter la durée de vie du SLM.

Il est aussi possible de placer l'élément sensible du SLM de l'invention entre deux polariseurs croisés pour réaliser une valve optique, ceci permettant d'augmenter le contraste à la lecture. L'agencement optique est en particulier celui décrit dans le document "Relaxation of one- and two-photon excitations in a polydiacetylene red form : a frequency and phase resolved analysis", de F. Charra et J.M. Nunzi, cité précédemment.

Il est aussi possible de placer l'élément sensile du SLM de l'invention entre deux miroirs réfléchissants en vue de réaliser une cavité optique résonnante, ceci permettant d'augmenter la sensibilité à l'écriture (inscription). L'agencement correspondant est en particulier celui décrit dans l'article "Femtosecond optical characterization of nonlinear organic materials and etalon logic gates", W.M. Gibbons et al., pp. 73-80, "Nonlinear optical properties of organic materials III", G. Khanarian (ed.), SPIE proc. 1337 (1990).

Les applications industrielles du modulateur spatial de lumière conforme à l'invention sont en particulier celles de l'article de Warde et Fisher cité précédemment. De plus, le SLM de l'invention peut être utilisé pour la réalisation de mémoire dynamique constituée de points mémoires dont la juxtaposition constitue l'équivalent d'une image ainsi que pour le traitement de signaux de communication optiques ; ce traitement consiste en la modulation d'intensité d'un faisceau lumineux unique par un modulateur de lumière à un seul point image.

Il est en outre possible d'accroître la sensibilité d'écriture du SLM de l'invention par unité de surface et de réduire les contraintes thermiques en accroîssant la taille effective des points mémoires ; ceci peut être réalisé en concentrant l'énergie reçue par les points d'image à l'aide de réseaux de microlentilles comme décrit dans le document "Fabrication of high-quality aspheric refractive microlenses : comparison with diffractive (binary) microlenses", C. Zarowin et al., "Technical digests of CLEO'91, pp. 30, CMD3 (1991)".

## Revendications

1. Modulateur spatial de lumière à adressage optique comportant un élément actif (10) consistant en une couche mince active (14) d'un oligomère organique photochrome à excitation par voie optique d'états transitoires réversibles, présentant un spectre d'absorption lumineuse photo-induit à pic étroit et des moyens d'adressage d'un faisceau lumineux d'écriture (32) sur l'élément actif pour exciter lesdits états transitoires et donc induire ledit spectre.

2. Modulateur selon la revendication 1, caractérisé en ce que l'oligomère photochrome est une molécule constituée de maillons rigides libres de tout mouvement entre eux et comportant une alternance régulière de simples et doubles liaisons carbone-carbone.

3. Modulateur selon la revendication 1 ou 2, caractérisé en ce que l'oligomère présente un état singulet photo-induit.

4. Modulateur selon l'une quelconque des revendications 1 à 3, caractérisé en ce que la couche mince active renferme un oligomère actif inclu dans une matrice de polymère optiquement inactif.

5. Modulateur selon l'une quelconque des revendications 1 à 4, caractérisé en ce qu'il comprend un support transparent (12) à la lumière visible et/ou ultraviolette.

6. Modulateur selon l'une quelconque des revendications 1 à 5, caractérisé en ce que le matériau photochrome est un oligomère d'au moins un monomère de formule (I) :

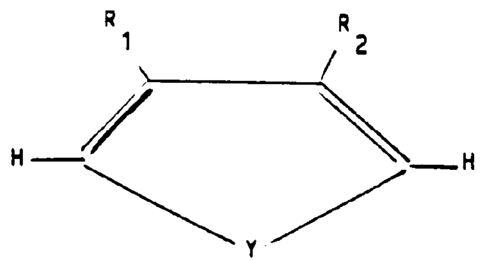

(I)

dans laquelle Y représente 0, S, Se, Te, -C(RR') ou -N(R)- avec R et R' représentant indépendamment H ou un groupement alkyle, alkyle substitué, aryle ou aryle substitué ; $R_1$ et $R_2$ représentent chacun indépendamment H, un halogène ou un groupement $-CF_3$, $-NO_2$, -CN, $-COOR_3$, $-NR_4(R_5)$, alkyle, alkyle substitué, aryle, aryle substitué, alcoxy ou polyalcoxy avec $R_3$ représentant un groupement alkyle substitué ou un métal, $R_4$ représentant H ou un groupement alkyle ou alkyle substitué, $R_5$ représentant un groupement alkyle, acyle ou aryle ; ou bien $R_1$ et $R_2$ représentent ensemble un groupement hydrocarboné divalent éventuellement insaturé ou éventuellement interrompu et/ou terminé par au moins un hétéroatome.

7. Modulateur selon l'une quelconque des revendications 1 à 5, caractérisé en ce que le matériau photochrome est un oligomère de formule (III) suivante:

III

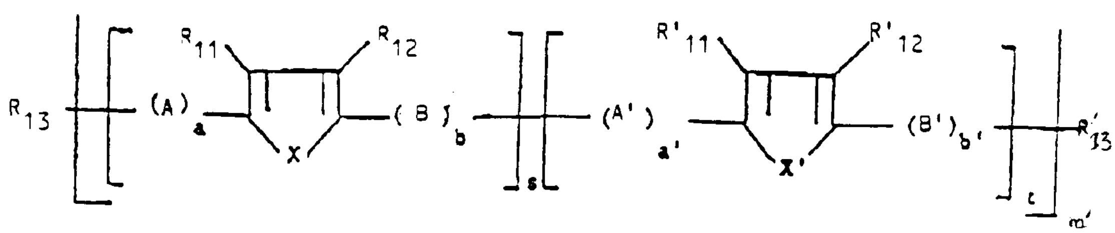

dans laquelle X et X' représentent indépendamment O, S, Se, Te, -C(RR') ou -N(R)-, avec R et R' représentant indépendamment H, ou un groupement alkyle, alkyle substitué, aryle ou aryle substitué ; $R_{11}$, $R_{12}$, $R'_{11}$, $R'_{12}$, $R_{13}$, $R'_{13}$ représentent chacun indépendamment -H, Cl, F, un groupement $-CF_3$, $-NO_2$, -CN, $-COOR'_3$, $-N(R'_4)(R'_5)$, ou un groupement alkyle, alkyle, substitué, aryle, aryle substitué, alcoxy ou polyalcoxy, avec $R'_3$ représentant un groupement alkyle ou alkyle substitué ou un métal, $R'_4$ représentant H ou un groupement alkyle ou alkyle substitué, $R'_5$ représentant un groupement alkyle, acyle ou aryle, ou bien les couples $R_{11}$ et $R_{12}$ et/ou $R'_{11}$ et $R'_{12}$ représentant ensemble un groupement hydrocarboné divalent éventuellement insaturé ou éventuellement interrompu et/ou terminé par au moins un hétéroatome ; A, B, A', B' représentent indépendamment un groupement $-C(R_6)=C(R_7)-$, -C=C-, $-N(R_8)-$, $-C(R_9)=N-$, $-N=C(R_{10})-$, avec $R_6$, $R_7$, $R_8$, $R_9$ et $R_{10}$ représentant indépendamment -H, ou un groupement alkyle, alkyle substitué, aryle ou aryle substitué ; a, b, a', b' sont des nombres égaux indépendamment à 0 ou à 1 ; ou bien B représente en outre un groupement arylène cyclique ou hétérocyclique et dans ce cas b=1 et a'=0 ; s et t sont des nombres entiers, y compris zéro, dont l'un au moins est différent de zéro, m' est un nombre entier au moins égal à 1 ; les nombres s, t et m' étant tels que m'(s + t) = m avec m étant un nombre entier allant de 4 à 24.

8. Modulateur selon l'une quelconque des revendications 1 à 5, caractérisé en ce que le matériau photochrome est un oligomère de formule (IV) suivante :

(IV) 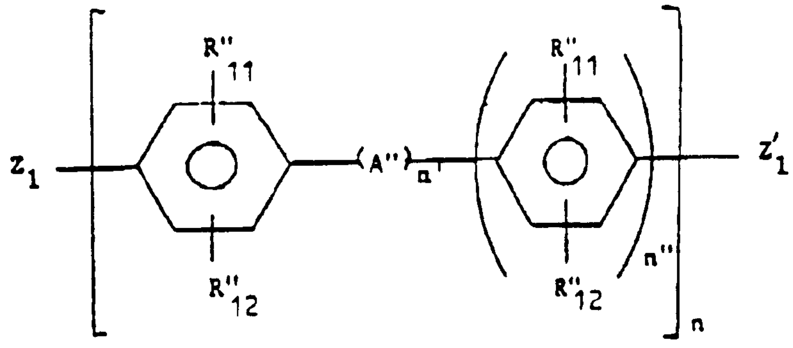

dans laquelle $R''_{11}$, $R''_{12}$, $Z_1$ et $Z'_1$ représentent chacun indépendamment -H, Cl, F ou un groupement trifluorométhyle ou un groupement nitro ; A" représente $-C(T_1)=C(T_2)-$, -C=C-, $-N(R_{14})-$, $-C(R_{15})=N-$, $-N=C(R_{16})-$, avec $T_1$ et $T_2$ représentant indépendamment -H ou un alkyle inférieur ; $R_{14}$, $R_{15}$ et $R_{16}$ représentent -H, un groupement alkyle, alkyle substitué, aryle ou aryle substitué ; n' est un nombre égal à zéro ou 1 ; n" est un nombre égal à zéro ou 1, et n est un nombre entier allant de 3 à 12.

**9.** Modulateur selon l'une quelconque des revendications 1 à 8, caractérisé en ce que le matériau photochrome est un oligomère comportant m cycles aromatiques avec m allant de 2 à 24.

**10.** Modulateur selon l'une quelconque des revendications 1 à 9, caractérisé en ce que le matériau photochrome est un oligomère de thiophène comportant de 2 à 12 hétérocycles.

**11.** Modulateur selon l'une quelconque des revendications 1 à 10, caractérisé en ce que la couche mince est évaporée sous vide sur un support.

**12.** Modulateur selon l'une quelconque des revendications 2 à 11, caractérisé en ce que les molécules d'oligomère sont orientées parallèlement entre elles dans le plan de la couche.

**13.** Modulateur selon l'une quelconque des revendications 1 à 12 pour moduler la lumière d'un faisceau d'écriture (32), caractérisé en ce qu'il comprend un miroir (40) sur lequel repose la couche active, ce miroir étant réfléchissant à la longueur d'onde du faisceau de lecture (18) et transparent à la longueur d'onde du faisceau d'écriture (32).

**14.** Modulateur selon l'une quelconque des revendications 1 à 13 pour moduler la lumière d'un faisceau de lecture (18), caractérisé en ce qu'il comprend un miroir (43) sur lequel repose la couche active, réfléchissant les longueurs d'onde des faisceaux d'écriture et de lecture.

**15.** Modulateur selon la revendication 14, caractérisé en ce que le faisceau de lecture est un faisceau laser.

**16.** Modulateur selon la revendication 14 ou 15 pour transformer la lumière incohérente d'un faisceau d'écriture en une lumière cohérente, caractérisé en ce que le faisceau lumineux d'écriture (32) est un faisceau de lumière incohérente et le faisceau de lecture (18) est un faisceau de lumière cohérente accordé au voisinage du pic étroit du spectre d'absorption lumineuse photo-induit.

**17.** Modulateur selon l'une quelconque des revendications 1 à 16, caractérisé en ce qu'il comprend des moyens pour déplacer l'élément sensible (10) selon le plan (xy) de la couche, à une vitesse inférieure à celle de réponse de l'élément sensible (10).

**18.** Modulateur selon l'une quelconque des revendications 1 à 17, caractérisé en ce que l'élément sensible (10) est placé entre deux polariseurs croisés, pour augmenter le contraste à la lecture.

**19.** Modulateur selon l'une quelconque des revendications 1 à 18, caractérisé en ce que l'élément sensible (10) est placé entre deux miroirs réfléchissants pour réaliser une cavité optique résonnante.

**20.** Modulateur spatial de lumière à adressage optique comportant un élément actif (10) consistant en une couche mince active (14) d'un oligomère organique photochrome à excitation par voie optique d'états transitoires réversibles, présentant un spectre d'absorption lumineuse photo-induit à pic étroit et des moyens

d'adressage d'un faisceau lumineux d'écriture (32) sur l'élément actif pour exciter lesdits états transitoires et donc induire ledit spectre, l'oligomère étant une molécule constituée de maillons rigides libres de tout mouvement entre eux et comportant une alternance régulière de simples et doubles liaisons carbone-carbone.

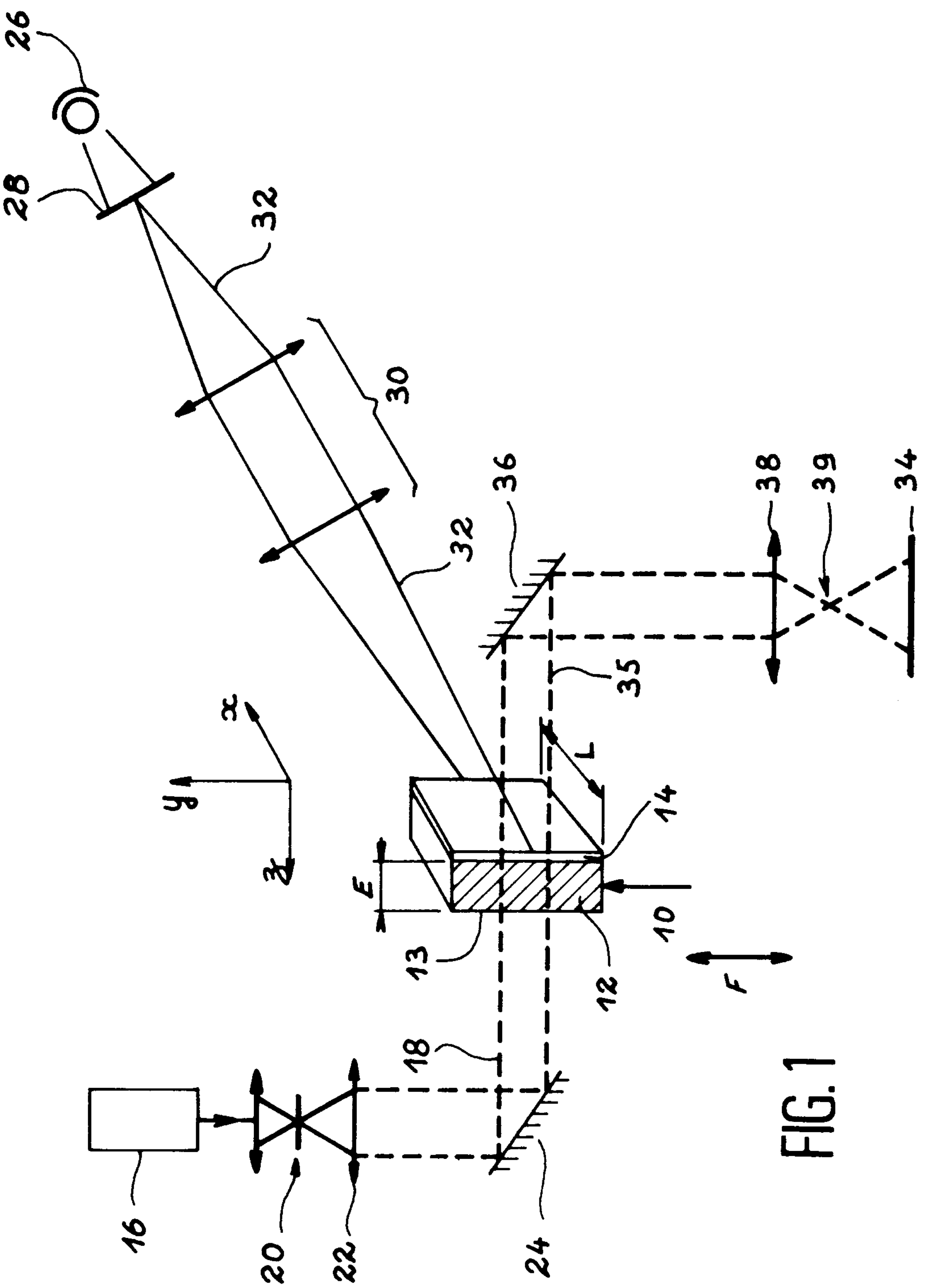


FIG. 1

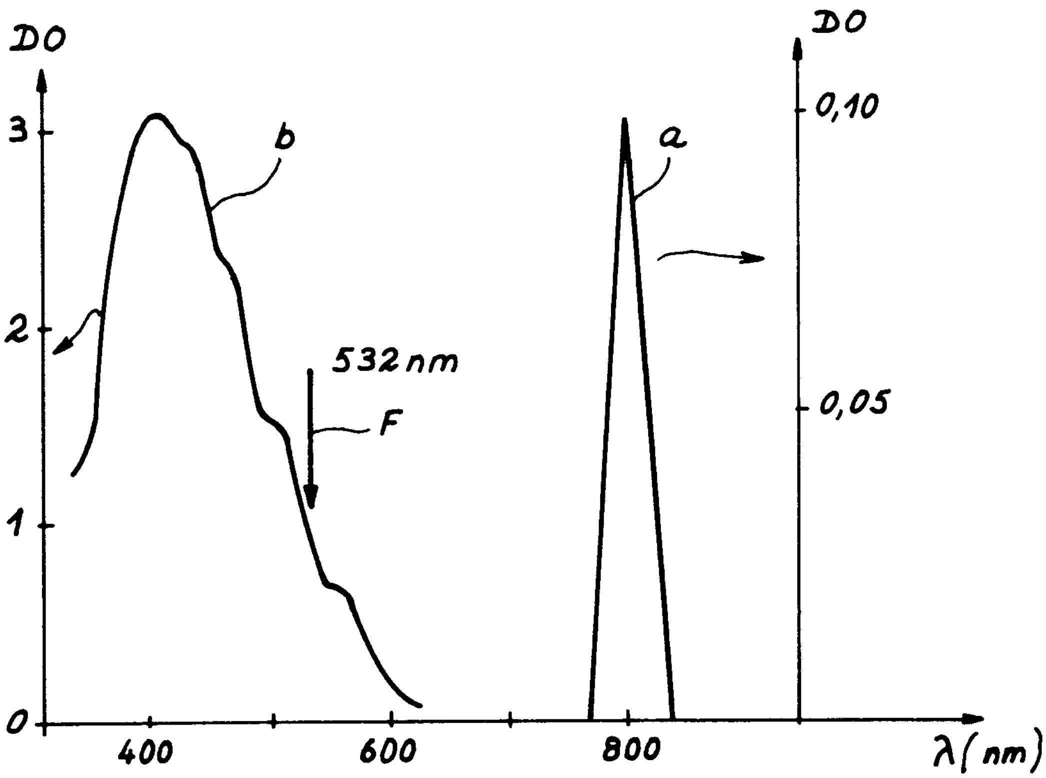
DO
3
2
1
0
b
532 nm
F
a
DO
0,10
0,05
400
600
800
λ (nm)

FIG. 2

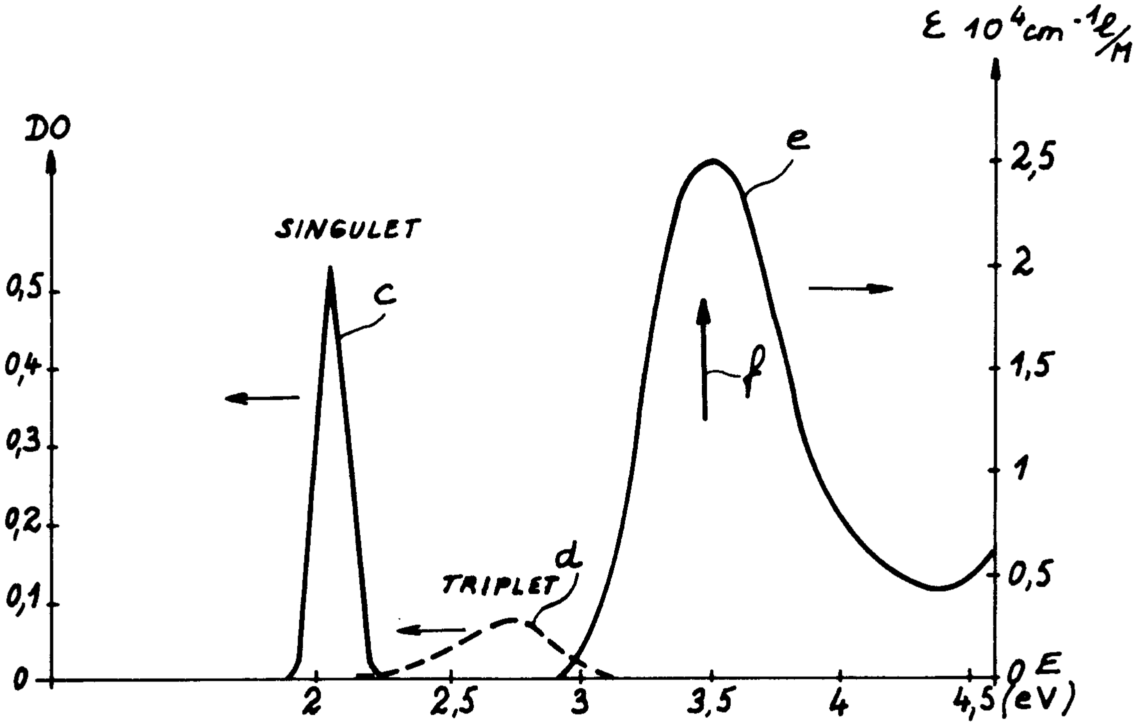
ε 10⁴ cm⁻¹ ℓ/M
DO
SINGULET
c
0,5
0,4
0,3
0,2
0,1
0
TRIPLET
d
e
f
2,5
2
1,5
1
0,5
0
2
2,5
3
3,5
4
4,5
E (eV)

FIG. 3

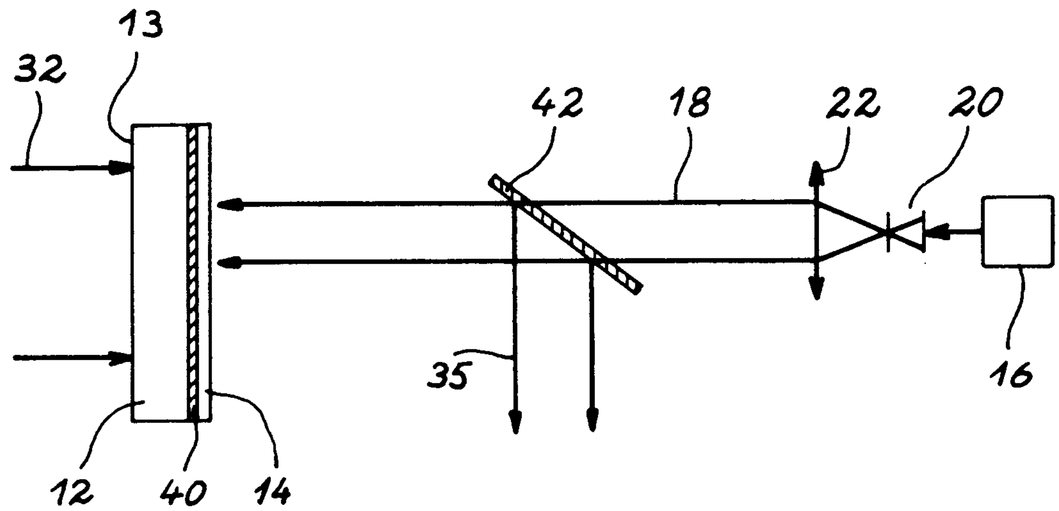


FIG. 4

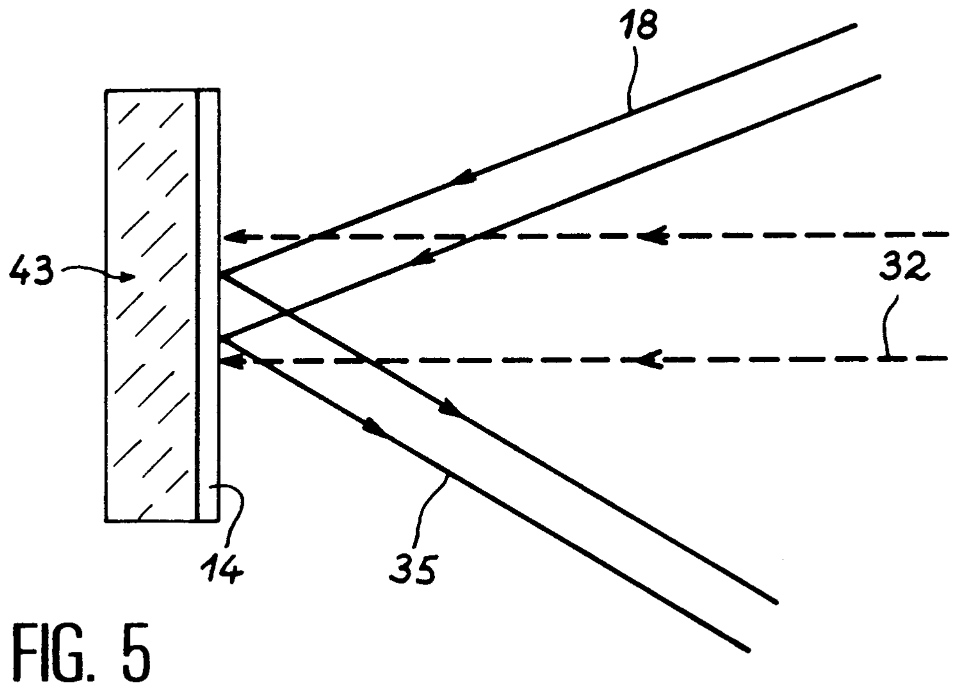


FIG. 5

Office européen des brevets

# RAPPORT DE RECHERCHE EUROPEENNE

Numero de la demande

EP 93 40 0049

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-5 062 693 (D.N.BERATAN & AL)<br>* le document en entier * | 1,4,5, 13-16 | C09K9/02<br>G02F1/35<br>G02F1/01 |
| A | EP-A-0 384 811 (RHONE-POULENC)<br>* le document en entier * | 2-7,9, 10,12,15 | |
| A | WO-A-8 905 843 (MERCK)<br>* page 19, ligne 17 - ligne 23 *<br>* revendications 1-9 * | 1-5 | |
| A | OPTOELECTRONICS DEVICES AND TECHNOLOGIES vol. 5, no. 1, 19 Juin 1990, TOKYO,JAPAN pages 1 - 19<br>K.YOSHINO & AL 'Novel optical property of conducting polymer and its application'<br>* page 1 - page 3 *<br>* page 8 *<br>* page 16 * | 2,3,6-8 | |

| DOMAINES TECHNIQUES RECHERCHES (Int. Cl.5 ) |
|---|
| C09K<br>G02F |

Le présent rapport a été établi pour toutes les revendications

| Lieu de la recherche | Date d'achèvement de la recherche | Examinateur |
|---|---|---|
| LA HAYE | 06 AVRIL 1993 | DROUOT M.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)